# EUROPEAN PATENT APPLICATION

(11) **EP 3 862 951 A2**
(43) Date of publication of application: **11.08.2021**
(21) Application number: 21176013.7
(22) Date of filing: 26.05.2021
(51) Int. Cl.: G06Q 20/02, G06Q 20/22, G06Q 20/38

(54) **METHOD AND APPARATUS OF PROCESSING DEPOSIT, DEVICE AND STORAGE MEDIUM**

(30) Priority: 22.07.2020 CN 202010708241
(71) Applicant: BAIDU ONLINE NETWORK TECHNOLOGY (BEIJING) CO., LTD., Beijing 100085 (CN)
(72) Inventor: JING, Bo, Beijing, 100085 (CN)
(74) Representative: advotec.

(57) **Abstract**

The embodiments of the disclosure provide a method of processing deposit, an apparatus of processing deposit and a storage medium, relate to the block-chain technology, and are applied to cloud computing and cloud services. The method includes: receiving (S101) a data deposit transaction request initiated by a deposit requester based on deposit data, a credible timestamp of the deposit data obtained in advance and a digital signature of a timestamp provider that provides the credible timestamp, wherein the credible timestamp is obtained by the timestamp provider from a timestamp server of the deposit requester; and determining (S102) that the credible timestamp of the deposit data is valid when the digital signature matches the deposit data, executing the data deposit transaction request, and storing the deposit data and the credible timestamp of the deposit data in a block-chain network.

## Description

### TECHNICAL FIELD

The disclosure relates to the field of computer technologies, specifically to the field of block-chain technologies, and in particular to a method of processing deposit, an apparatus of processing deposit, an electronic device and a storage medium.

### BACKGROUND

Block-chain data deposit refers to data storage on a block-chain to achieve purposes of tamper-proofing, traceability and trustworthy data sources. In order to further strengthen authenticity and authority of deposit data, the deposit service provider generally cooperates with the credible timestamp service provider, that is, the credible timestamp service provider adds credible timestamps to the deposit data.

In the existing solution, the deposit service provider generally employs on-chain storage of the deposit data, and then the credible timestamp corresponding to the deposit data is requested from the credible timestamp service provider. The credible timestamp and the deposit data are combined and stored on chain, which leads to low efficiency of the entire deposit processing.

### SUMMARY

The embodiments of the disclosure provide a method of processing deposit, an apparatus of processing deposit, an electronic device and a storage medium, to improve processing efficiency of data deposit.

Embodiments of the disclosure provide a method of processing deposit. The method includes: receiving a data deposit transaction request initiated by a deposit requester based on deposit data, a credible timestamp of the deposit data obtained in advance and a digital signature of a timestamp provider that provides the credible timestamp, in which the credible timestamp is obtained by the timestamp provider from a timestamp server of the deposit requester; and determining that the credible timestamp of the deposit data is valid when the digital signature matches the deposit data, executing the data deposit transaction request, and storing the deposit data and the credible timestamp of the deposit data in a block-chain network.

In some embodiments, the digital signature is obtained based on a hash value of the deposit data and a private key provided by the timestamp provider.

In some embodiments, it is determined whether the digital signature matches the deposit data by: calculating a current hash value of the deposit data; verifying the digital signature by using the private key of the timestamp provider, and obtaining an initial hash value from the digital signature; and determining the digital signature matching the deposit data when the current hash value is consistent with the initial hash value.

In some embodiments, it is determined whether the digital signature matches the deposit data by: sending the data deposit transaction request to the timestamp provider to request the timestamp provider to determine whether the digital signature matches the deposit data.

In some embodiments, the credible timestamp of the deposit data is provided by the timestamp provider after a payment voucher of the deposit requester is obtained.

In some embodiments, the method also includes: generating a deposit identifier of the deposit data, and sending the deposit identifier to the deposit requester.

In some embodiments, the method also includes: sending a cross-chain storage transaction request to a target deposit block-chain network to store the deposit data and the credible timestamp of the deposit data in the target deposit block-chain network.

Embodiments of the disclosure provide an apparatus of processing deposit. The apparatus includes: a receiving module and an executing module. The receiving module is configured to receive a data deposit transaction request initiated by a deposit requester based on deposit data, a credible timestamp of the deposit data obtained in advance and a digital signature of a timestamp provider that provides the credible timestamp, in which the credible timestamp is obtained by the timestamp provider from a timestamp server of the deposit requester. The executing module is configured to determine that the credible timestamp of the deposit data is valid when the digital signature matches the deposit data, to execute the data deposit transaction request, and to store the deposit data and the credible timestamp of the deposit data in a block-chain network.

In some embodiments, the digital signature is obtained based on a hash value of the deposit data and a private key provided by the timestamp provider.

In some embodiments, the apparatus also includes: a calculating module, configured to calculate a current hash value of the deposit data; a verifying module, configured to verify the digital signature by using the private key of the timestamp provider, and to obtain an initial hash value from the digital signature; and a comparing module, configured to determine the digital signature matching the deposit data when the current hash value is consistent with the initial hash value; a sending module, configured to send the data deposit transaction request to the timestamp provider to request the timestamp provider to determine whether the digital signature matches the deposit data.

In some embodiments, the credible timestamp of the deposit data is provided by the timestamp provider after a payment voucher of the deposit requester is obtained.

In some embodiments, the apparatus also includes: a generating module, configured to generate a deposit identifier of the deposit data, and to send the deposit identifier to the deposit requester.

In some embodiments, the apparatus also includes: a cross-chain module, configured to send a cross-chain storage transaction request to a target deposit block-chain network to store the deposit data and the credible timestamp of the deposit data in the target deposit block-chain network.

Embodiments of the disclosure provide an electronic device. The electronic device includes: at least one processor and a memory communicatively connected with the at least one processor. The memory stores instructions executable by the at least one processor, and when the instructions are executed by the at least one processor, the at least one processor executes the method of processing deposit according to any embodiment of the disclosure is performed.

Embodiments of the disclosure provide a non-transitory computer-readable storage medium storing computer instructions, the computer instructions are configured to make a computer to execute the method of processing deposit according to any embodiment of the disclosure.

According to the technical solution of the embodiments of the disclosure, before initiating the data deposit transaction request through the deposit requester, the credible timestamp of the deposit data is obtained. The data deposit transaction request is initiated based on the deposit data and the credible timestamp, and the data deposit transaction request is executed by the block-chain node to realize on-chain storage, thereby improving the processing efficiency of data deposit.

It should be understood that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a flowchart of a deposit processing method according to embodiments of the disclosure.
FIG. 2 is a flowchart of another deposit processing method according to embodiments of the disclosure.
FIG. 3 is a schematic diagram of a deposit processing method according to embodiments of the disclosure.
FIG. 4 is a schematic diagram of a deposit processing apparatus according to embodiments of the disclosure.
FIG. 5 is a block diagram of an electronic device according to embodiments of the disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein without departing from the scope and spirit of the disclosure. For clarity and conciseness, descriptions of well-known functions and structures are omitted in the following description.

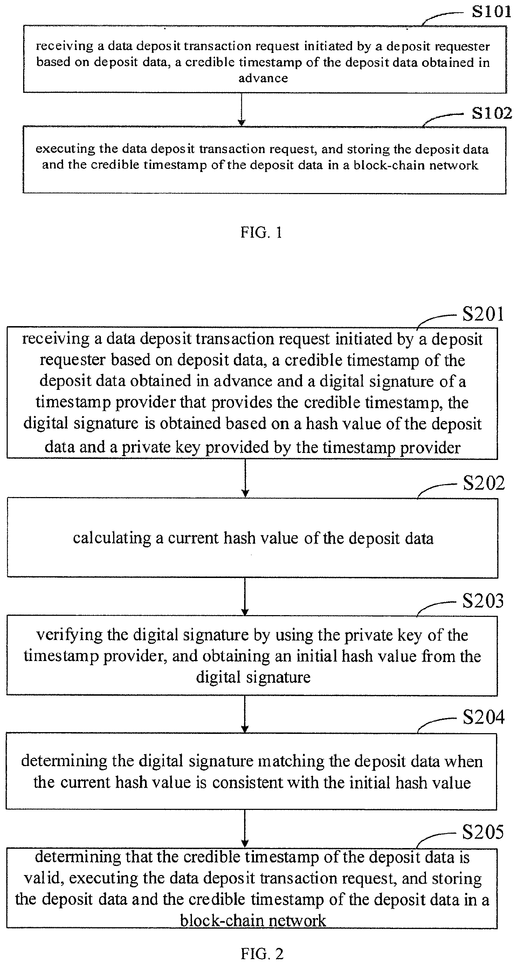

FIG. 1 is a flowchart of a deposit processing method according to embodiments of the disclosure. The embodiments of the disclosure are applied to data deposit scenarios. The method according to the embodiments of the disclosure is executed by a deposit processing apparatus. The apparatus is implemented by software and/or hardware, and is configured in a block-chain node, and the block-chain node is preferably a full node. The block-chain node may be deployed on any electronic device with computing capabilities, such as terminals and servers.

As illustrated in FIG. 1, the deposit processing method according to embodiments of the disclosure includes the following steps.

At step S101, a data deposit transaction request is received, and the data deposit transaction request is initiated by a deposit requester based on deposit data, a credible timestamp of the deposit data obtained in advance.

The deposit requester may indicate a user who has data deposit requirements or a terminal device controlled by the deposit user. For example, if the deposit requester refers to the deposit user, the deposit user initiates the data deposit transaction request to the block-chain network through the user terminal. If the deposit request refers to the terminal device, the data deposit transaction request is initiated by the user to the block-chain network. In order to improve the efficiency of data deposit processing in the block-chain network, the deposit requester needs to obtain the credible timestamp corresponding to the deposit data from the timestamp provider that provides the credible timestamp in advance. In detail, the credible timestamp is obtained by the timestamp provider from the timestamp service provider selected by the deposit requester, that is, in the embodiments of the disclosure, the timestamp provider refers to a combination of a plurality of authoritative timestamp service providers for the deposit requester. The timestamp provider maintains and manages the plurality of the authoritative timestamp service providers. The deposit requester chooses the credible timestamp server by itself, and then obtains the credible timestamp of the deposit data through interaction between the timestamp provider and the timestamp server. Similarly, the timestamp provider refers to a service organization that provides the credible timestamp service, or a terminal device controlled by the service organization. The deposit data may be any data with deposit value.

After the credible timestamp is obtained by the deposit requester, the deposit user chooses a trustworthy timestamp service provider, increases choosing flexibility of the credible timestamp service during the deposit process. At the same time, by determining the timestamp service providers in advance, it is possible to avoid a phenomenon that service provided by an individual timestamp service provider is unstable during the deposit process, which affects the deposit process, thereby improving robustness of the deposit business. In addition, the deposit requester obtains the credible timestamp from the timestamp provider, which belongs to an off-chain operation and is executed before the deposit data is stored on chain. On the one hand, the process does not affect normal process of data deposit. On the other hand, there is no need to perform a separate on-chain operation of the deposit data, which alleviates processing pressure of transaction requests in the block-chain network.

For example, the credible timestamp of the deposit data is provided by the timestamp provider after obtaining a payment voucher of the deposit requester. For example, the deposit requester interacts with the timestamp provider, and the timestamp provider provides a plurality of credible timestamp service providers (that is, the above timestamp service providers) and a variety of credible timestamp service packages to the deposit requester. The deposit requester determines the specific provider and service package based on requirements, and provides the payment voucher to the timestamp provider to obtain a service authority. The timestamp provider receives the deposit request from the deposit requester, and obtains the credible timestamp corresponding to the deposit data. For example, the credible timestamp corresponding to the deposit data is obtained by interacting with the credible timestamp service providers determined by the deposit requester. Finally, the credible timestamp is returned to the deposit requester. By setting the credible timestamp corresponding to the deposit data by a support voucher, the behavior of obtaining the credible timestamp of the deposit requester is effectively restricted, and malicious requests may be avoided.

At step S102, the data deposit transaction request is executed, and the deposit data and the credible timestamp of the deposit data are stored in a block-chain network.

After the block-chain node receives the data deposit transaction request from the deposit requester, verifying the transaction request includes but not limited to: verifying whether the transaction request is compliant and whether the transaction request includes the valid deposit data, and verifying a signature of the deposit requester by a public key of the deposit requester through the block-chain node if the deposit requester uses the private key to sign the data deposit transaction request; and after the verification is passed, executing the data deposit transaction request, and storing the deposit data and the credible timestamp of the deposit data on the block-chain network. The public key and the private key of the deposit requester may be a private key pair assigned to the deposit requester by an electronic verification service organization.

According to the technical solution of the embodiments of the disclosure, before the data deposit transaction request is initiated by the deposit requester, the credible timestamp of the deposit data is obtained, and then the data deposit transaction request is initiated based on the deposit data and the credible timestamp. The block-chain node executes the data deposit transaction request to achieve on-chain storage. During the entire deposit process, it is possible to omit the operation of separately storing the deposit data on chain in the existing solution, to solve a problem of low deposit processing efficiency in the existing deposit solution, and to improve the data deposit processing efficiency in the block-chain network, so that the processing pressure of transaction requests in the block-chain network is relieved.

Based on the above technical solution, the received data deposit transaction request includes the digital signature of the timestamp provider that provides the credible timestamp, that is, in the embodiments of the disclosure, the data deposit transaction request may be initiated by the deposit requester based on the deposit data, the credible timestamp of the deposit data obtained in advance, and the digital signature of the timestamp provider that provides the credible timestamp. The credible timestamp is obtained by the timestamp provider from the timestamp server of the deposit requester. The digital signature of the timestamp provider is obtained based on the hash value of the deposit data and the private key of the timestamp provider. That is, when the timestamp provider sends the credible timestamp to the deposit requester, the digital signature calculated based on the hash value of the deposit data and the private key of the timestamp provider is sent to the deposit requester. The private key of the timestamp provider is obtained based on any private key generation algorithm. Preferably, the digital signature is obtained based on the hash value of the deposit data and the private key of the timestamp provider, and the public key of the timestamp provider is publically disclosed, to verify authenticity and validity of the digital signature by any recipient. The private key of the timestamp provider may be a private key assigned by an electronic certification service agency. The hash value of the deposit data may be realized by any available hash calculation method, which is not limited in the embodiments of the disclosure.

Optionally, executing the data deposit transaction request and storing the deposit data and the credible timestamp of the deposit data in a block-chain network includes: determining that the credible timestamp of the deposit data is valid when the digital signature matches the deposit data, executing the data deposit transaction request, and storing the deposit data and the credible timestamp of the deposit data in the block-chain network.

The digital signature matches the deposit data, when it is determined that the digital signature of the timestamp provider is real and the digital signature is a signature for the deposit data. In detail, the block-chain node performs the verification operation by itself, or send the data deposit transaction request to the timestamp provider for verification, that is, the execution of the verification operation is flexible, and the implementation logic may be set according to business requirements.

For example, determining whether the digital signature matches the deposit data includes: the block-chain node sends the data deposit transaction request to the timestamp provider to request the timestamp provider to determine whether the digital signature matches the deposit data. For example, after the timestamp provider receives the data deposit transaction request, the current hash value of the deposit data in the data deposit transaction request is recalculated. A local key is adopted to verify the digital signature in the data deposit transaction request, and the initial hash value of the deposit data is obtained from the digital signature. If the current hash value is consistent with the initial hash value, it is determined that the digital signature matches the deposit data, and then a verification success message is sent to the block-chain node, and the block-chain node executes the data deposit transaction request. If the current hash value is inconsistent with the initial hash value, it is determined that the digital signature does not match the deposit data, and then a verification failure message is sent to the block-chain node, and the block-chain node refuses to execute the data deposit transaction request.

In an embodiment, for deposit requirements, a selection authority of the timestamp service provider is given to the deposit requester in advance, which solves problems of unstable, low performance or low cost performance of the timestamp service during the deposit process. Neither a local node nor the timestamp provider could predict whether the specific timestamp service provider selected by the deposit requester is true and reliable. Therefore, before executing the data deposit transaction request, the local node needs to verify that the digital signature of the timestamp provider in the data deposit transaction request matches the deposit data, and then the data deposit transaction request is executed to ensure the reliability of sources of the credible timestamp of the deposit data, so that the reliability and authority of the data deposit are ensured. Moreover, if the verification operation is performed by the timestamp provider, data processing pressure on the block-chain node may be alleviated.

FIG. 2 is a flowchart of another deposit processing method according to embodiments of the disclosure. For optimization and expansion of the above technical solution, the above technical solution is combined with the above various optional implementation manners. As illustrated in FIG. 2, the method may include the following steps.

At step S201, a data deposit transaction request initiated by a deposit requester based on deposit data, a credible timestamp of the deposit data obtained in advance and a digital signature of a timestamp provider that provides the credible timestamp, is received, in which the credible timestamp is obtained by the timestamp provider from a timestamp server of the deposit requester.

For example, after the block-chain node receives the data deposit transaction request, the signature of the deposit requester is verified by using the public key of the deposit requester, and then data such as the credible timestamp of the deposit data, the credible timestamp of the deposit data, the digital signature of the timestamp provider is parsed from the data deposit transaction request.

At step S202, a current hash value of the deposit data is calculated.

At step S203, the digital signature is verified by using the private key of the timestamp provider, and an initial hash value is obtained from the digital signature.

For example, if the digital signature of the timestamp provider is obtained based on the hash value of the deposit data and the private key of the timestamp provider, the block-chain node may verify the digital signature by using the public key of the timestamp provider obtained in advance, and obtain the initial hash value of the deposit data from the digital signature. The initial hash value of the deposit data is obtained from the digital signature, which means that the signature verification is successful. If the verification of the digital signature fails, the initial hash value of the deposit data may not be obtained.

At step S204, it is determined that the digital signature matches the deposit data, when the current hash value is consistent with the initial hash value.

At step S205, it is determined that the credible timestamp of the deposit data is valid, the data deposit transaction request is executed, and the deposit data and the credible timestamp of the deposit data are stored in a block-chain network.

According to the technical solution of the embodiments of the disclosure, before initiating the data deposit transaction request, the deposit requester obtains the credible timestamp of the deposit data, and then initiates the data deposit transaction request based on the deposit data and the credible timestamp of the deposit data. After the block-chain node determines that the digital signature of the timestamp provider matches the deposit data, it is determined that the credible timestamp of the deposit data is valid, and the data deposit transaction request is executed, which not only solves the problem of low deposit processing efficiency in the existing deposit solutions and improves the efficiency of data deposit processing, but also ensures the reliability of the source of the credible timestamp of the deposit data, thereby ensuring the reliability and authority of the data deposit.

Based on the above technical solution, optionally, the method according to the embodiments of the disclosure may further include: generating a deposit identifier of the deposit data, and sending the deposit identifier to the deposit requester.

The deposit identifier may also be called as deposit ID, which is configured to uniquely identify the deposit data. By sending the deposit ID to the deposit requester, it is not only convenient for the deposit requester to learn a deposit result in time, but also convenient for the deposit requester to initiate a query transaction request for the deposit data to the block-chain network based on the deposit ID, so as to realize query of historical deposit data.

For example, in the process of storing the deposit data and the credible timestamp of the deposit in the current block-chain network, the block-chain node generates the deposit ID for the deposit data, and then sends the deposit ID to the deposit platform, and then the deposit ID is sent to the deposit requester through the deposit platform.

Optionally, the method according to the embodiments of the disclosure further includes: sending a cross-chain storage transaction request to a target deposit block-chain network to store the deposit data and the credible timestamp of the deposit data in the target deposit block-chain network.

The target deposit block-chain network may refer to deposit block-chain networks controlled by an official institution. The block-chain node is used to implement the technical solutions of the embodiments of the disclosure, and the current block-chain network to which the block-chain node belongs may refer to the deposit block-chain networks controlled by the official institution. The current block-chain node sends the cross-chain storage transaction request to the target deposit block-chain network based on any existing cross-chain technology. For example, deployment data of the current block-chain network and the target deposit block-chain network are deployed on the current block-chain node at the same time, so the current block-chain network and the target deposit block-chain network are implemented at the same time. The cross-chain storage transaction request is generated based on the deployment data of the target deposit block-chain network and send the cross-chain storage transaction request to the target deposit block-chain network. Alternatively, the target deposit block-chain network sets certain access verification conditions in advance. The access verification conditions are used to define conditions that need to be met to access the target deposit block-chain network. If the current block-chain node meets the access verification conditions, the target deposit block-chain network is accessed and the cross-chain storage transaction request is sent to the target deposit block-chain network. The access verification conditions may be specifically set according to the deposit business scenario, which is not limited in the embodiments of the disclosure. For example, the block-chain node has an authorization certification certificate specified by the target deposit block-chain network, and the block-chain node has an access authority identifier assigned by the target block-chain network, and an endorsement of an endorsement node specified by the block-chain node.

By cross-chain storage of the deposit data and the credible timestamp of the deposit data in the target deposit block-chain network, the integrity and authority of the deposit processing process are guaranteed, double guarantee of tamper-proof, traceable, and trustworthy data source for the deposit data is ensured, and official credible data for subsequent evidence collection is provided.

After the deposit data and the credible timestamp of the deposit data are stored in the target deposit block-chain network, the block-chain node in the target deposit block-chain network may generate a target deposit ID for the deposit data, and send the target deposit ID to the deposit requester, for example, by interacting with the deposit platform, the target deposit ID is sent to the deposit platform. The target deposit ID is sent to the deposit requester through the deposit platform, so that the deposit requester knows the deposit result in time, and it is also convenient for the deposit requester to initiate the query transaction request for the deposit data to the target deposit block-chain network based on the target deposit ID, which realizes the query of the historical deposit data.

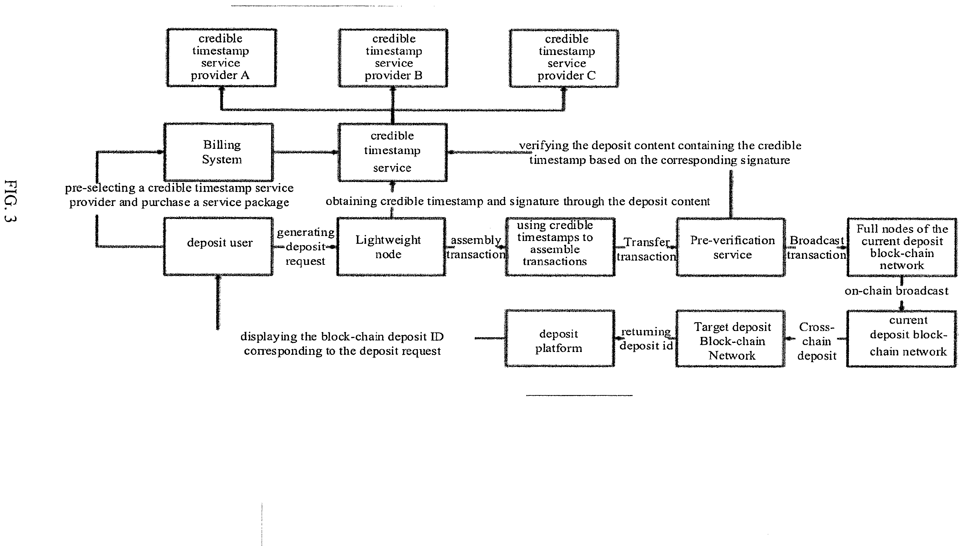

FIG. 3 is a schematic diagram of a deposit processing method according to embodiments of the disclosure. The method is used to exemplify the embodiments of the disclosure, and should not be construed as a specific limitation to the embodiments of the disclosure. As illustrated in FIG. 3, the deposit user may interact with the timestamp provider by using the terminal (which is used as a lightweight node). The timestamp provider provides a plurality of credible timestamp service providers and a variety of credible timestamp service packages to deposit users. The deposit user determines the specific provider and service package according to the user requirements, and provides the payment voucher to the timestamp provider through the billing system to obtain the service authority. Regarding the billing system, the deposit user chooses to pre-payment or after-payment. For pre-payment, the deposit user needs to purchase relevant service packages before obtaining the service authority (or access authority) to obtain the credible timestamp. When the package quota is insufficient or the user balance is insufficient, the timestamp provider refuses to provide the service. For after-payment, each service permission acquisition request of the deposit user is recorded, and finally the cost is reflected in the regularly generated bills.

The timestamp provider receives the deposit request of the deposit user, and interacts with the credible timestamp service provider determined by the deposit requester to obtain the corresponding credible timestamp based on the deposit data of the deposit requester. At the same time, the hash value of the deposit data is calculated, and the digital signature is calculated based on the hash value and the local private key, and then data such as the credible timestamp of the deposit data and the calculated digital signature is sent to the deposit requester.

The deposit requester receives data such as the credible timestamp of the deposit data and the digital signature of the timestamp provider, combines the deposit data, the credible timestamp of the deposit data, and the digital signature of the timestamp provider into transaction, and sends the transaction to the block-chain network, that is, a data deposit transaction request is initiated. After the block-chain verification node deployed with the pre-verification service receives the data deposit transaction request, matching between the digital signature of the timestamp provider in the data deposit transaction request and the deposit data is verified to determine the validity of the credible timestamp. In detail, the block-chain verification node forwards the received data deposit transaction request to the timestamp provider, and the timestamp provider verifies the matching between the timestamp provider's digital signature and the deposit data in the data deposit transaction request, and sends the verification result to the block-chain verification node. If the digital signature of the timestamp provider in the data deposit transaction request matches the deposit data, it is determined that the credible timestamp in the data deposit transaction request is valid. The block-chain verification node broadcasts the data deposit transaction request to the block-chain network, requests other block-chain nodes to execute the transaction request, and realizes the on-chain storage of the deposit data and the credible timestamp of the deposit data.

It should be noted that the block-chain node that executes the data deposit transaction request and the block-chain verifying node may be the same node or different nodes, and the two nodes may be deployed on the same electronic device, or may separately deployed on different electronic devices, which depends on specific deployment situation of the current block-chain network. After the deposit data and the corresponding credible timestamp are stored in the current block-chain network, any block-chain node initiates the cross-chain deposit transaction request to the target deposit block-chain network to store the deposit data and the credible timestamp corresponding to the deposit data on the target deposit block-chain network. After the on-chain deposit operation is completed on the current block-chain network and the target deposit block-chain network, a deposit ID corresponding to the corresponding network for the deposit data are generated, and the deposit ID is sent to the deposit user through the deposit platform, that is, the deposit user may check the deposit result through the deposit platform.

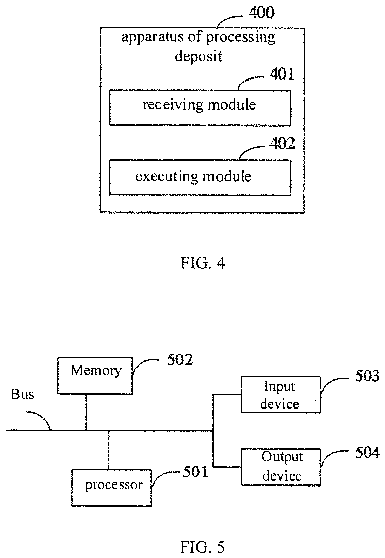

FIG. 4 is a schematic diagram of an apparatus of deposit processing according to embodiments of the disclosure. The embodiments of the disclosure are applied to a data deposit scenario. The apparatus in the embodiments of the disclosure is implemented by software and/or hardware, and is configured in a block-chain node. The block-chain node is deployed on any electronic device with computing capabilities, such as terminals and servers.

As illustrated in FIG. 4, the apparatus 400 of deposit processing according to embodiments of the disclosure includes: a receiving module 401 and an executing module 402.

The receiving module 401 is configured to receive a data deposit transaction request initiated by a deposit requester based on deposit data, a credible timestamp of the deposit data obtained in advance and a digital signature of a timestamp provider that provides the credible timestamp, in which the credible timestamp is obtained by the timestamp provider from a timestamp server of the deposit requester. The executing module 402 is configured to execute the data deposit transaction request, and to store the deposit data and the credible timestamp of the deposit data in a block-chain network.

Optionally, the data deposit transaction request includes the digital signature of the timestamp provider that provides the credible timestamp. That is, in the embodiments of the disclosure, the data deposit transaction request is initiated by a deposit requester based on the deposit data, the credible timestamp of the deposit data obtained in advance and the digital signature of a timestamp provider that provides the credible timestamp. The credible timestamp is obtained by the timestamp provider from the timestamp service provider selected by the deposit requester, and the digital signature of the timestamp provider is obtained based on the hash value of the deposit data and the private key of the timestamp provider.

Optionally, the executing module 402 is configured to determine that the credible timestamp of the deposit data is valid when the digital signature matches the deposit data, to execute the data deposit transaction request, and to store the deposit data and the credible timestamp of the deposit data in a block-chain network.

Optionally, the apparatus according to the embodiments of the disclosure further includes: a calculating module, a verifying module and a comparing module. The calculating module is configured to calculate a current hash value of the deposit data. The verifying module is configured to verify the digital signature by using the private key of the timestamp provider, and to obtain an initial hash value from the digital signature. The comparing module is configured to determine the digital signature matching the deposit data when the current hash value is consistent with the initial hash value.

Optionally, the apparatus according to the embodiments of the disclosure further includes: a sending module, configured to send the data deposit transaction request to the timestamp provider to request the timestamp provider to determine whether the digital signature matches the deposit data.

Optionally, the credible timestamp of the deposit data is provided by the timestamp provider after a payment voucher of the deposit requester is obtained.

Optionally, the apparatus according to the embodiments of the disclosure further includes: a generating module, configured to generate a deposit identifier of the deposit data, and to send the deposit identifier to the deposit requester.

Optionally, the apparatus according to the embodiments of the disclosure further includes: a cross-chain module, configured to send a cross-chain storage transaction request to a target deposit block-chain network to store the deposit data and the credible timestamp of the deposit data in the target deposit block-chain network.

The apparatus 400 of deposit processing according to embodiments of the disclosure executes any deposit processing method in the embodiments of the disclosure, and has the corresponding functional modules and beneficial effects of the execution method. For content that is not described in detail in the device embodiments of the disclosure, reference may be made to the description in any method embodiment of the disclosure.

According to the embodiments of the disclosure, the embodiments of the disclosure provide an electronic device and a readable storage medium.

FIG. 5 is a block diagram of an electronic device used to implement a method of processing deposit according to embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 5, the electronic device includes: one or more processors 501, a memory 502, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 501 is taken as an example in FIG. 5.

The memory 502 is a non-transitory computer-readable storage medium according to the disclosure. The memory stores instructions executable by at least one processor, so that the at least one processor executes the method according to the disclosure. The non-transitory computer-readable storage medium of the disclosure stores computer instructions, which are used to cause a computer to execute the method according to the disclosure.

As a non-transitory computer-readable storage medium, the memory 502 is configured to store non-transitory software programs, non-transitory computer executable programs and modules, such as program instructions/modules (for example, the receiving module 401 and the executing module 402 shown in FIG. 4) corresponding to the method in the embodiment of the disclosure. The processor 501 executes various functional applications and data processing of the electronic device by running non-transitory software programs, instructions, and modules stored in the memory 502, that is, implementing the method in the foregoing method embodiments.

The memory 502 may include a storage program area and a storage data area, where the storage program area may store an operating system and application programs required for at least one function. The storage data area may store data created according to the use of the electronic device for implementing the method. In addition, the memory 502 may include a high-speed random access memory, and a non-transitory memory, such as at least one magnetic disk storage device, a flash memory device, or other non-transitory solid-state storage device. In some embodiments, the memory 502 may optionally include a memory remotely disposed with respect to the processor 501, and these remote memories may be connected to the electronic device for implementing the method through a network. Examples of the above network include, but are not limited to, the Internet, an intranet, a local area network, a mobile communication network, and combinations thereof.

The electronic device used to implement the method of processing deposit may further include: an input device 503 and an output device 504. The processor 501, the memory 502, the input device 503, and the output device 504 may be connected through a bus or in other manners. In FIG. 5, the connection through the bus is taken as an example.

The input device 503 may receive inputted numeric or character information, and generate key signal inputs related to user settings and function control of an electronic device for implementing the method, such as a touch screen, a keypad, a mouse, a trackpad, a touchpad, an indication rod, one or more mouse buttons, trackballs, joysticks and other input devices. The output device 504 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, sound input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host. The server is a host product in a cloud computing service system to solve difficult management and poor business expansion of traditional physical hosting and VPS services.

According to the technical solution of the embodiments of the disclosure, the deposit requester obtains the credible timestamp of the deposit data before initiating the data deposit transaction request, and then initiates the data deposit transaction request based on the deposit data and the credible timestamp. The data deposit transaction request is executed by the block-chain nodes to realize on-chain storage, thereby improving an efficiency of data deposit processing.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

## Claims

1. A method of processing deposit, comprising:
receiving (S101) a data deposit transaction request initiated by a deposit requester based on deposit data, a credible timestamp of the deposit data obtained in advance and a digital signature of a timestamp provider that provides the credible timestamp, wherein the credible timestamp is obtained by the timestamp provider from a timestamp server of the deposit requester; and
determining (S102) that the credible timestamp of the deposit data is valid when the digital signature matches the deposit data, executing the data deposit transaction request, and storing the deposit data and the credible timestamp of the deposit data in a block-chain network.

2. The method according to claim 1, wherein the digital signature is obtained based on a hash value of the deposit data and a private key provided by the timestamp provider.

3. The method according to claim 1 or 2, wherein it is determined whether the digital signature matches the deposit data by:
calculating (S202) a current hash value of the deposit data;
verifying (S203) the digital signature by using the private key of the timestamp provider, and obtaining an initial hash value from the digital signature; and
determining (S204) the digital signature matching the deposit data when the current hash value is consistent with the initial hash value.

4. The method according to any of claims 1-3, wherein it is determined whether the digital signature matches the deposit data by:
sending the data deposit transaction request to the timestamp provider to request the timestamp provider to determine whether the digital signature matches the deposit data.

5. The method according to any of claims 1-4, wherein the credible timestamp of the deposit data is provided by the timestamp provider after a payment voucher of the deposit requester is obtained.

6. The method according to any of claims 1-5, further comprising:
generating a deposit identifier of the deposit data, and sending the deposit identifier to the deposit requester.

7. The method according to any of claims 1-6, further comprising:
sending a cross-chain storage transaction request to a target deposit block-chain network to store the deposit data and the credible timestamp of the deposit data in the target deposit block-chain network.

8. An apparatus (400) of processing deposit, comprising:
a receiving module (401), configured to receive a data deposit transaction request initiated by a deposit requester based on deposit data, a credible timestamp of the deposit data obtained in advance and a digital signature of a timestamp provider that provides the credible timestamp, wherein the credible timestamp is obtained by the timestamp provider from a timestamp server of the deposit requester; and
an executing module (402), configured to determine that the credible timestamp of the deposit data is valid when the digital signature matches the deposit data, to execute the data deposit transaction request, and to store the deposit data and the credible timestamp of the deposit data in a block-chain network.

9. The apparatus (400) according to claim 8, wherein the digital signature is obtained based on a hash value of the deposit data and a private key provided by the timestamp provider.

10. The apparatus (400) according to claim 8 or 9, further comprising:
a calculating module, configured to calculate a current hash value of the deposit data;
a verifying module, configured to verify the digital signature by using the private key of the timestamp provider, and to obtain an initial hash value from the digital signature;
a comparing module, configured to determine the digital signature matching the deposit data when the current hash value is consistent with the initial hash value; and
a sending module, configured to send the data deposit transaction request to the timestamp provider to request the timestamp provider to determine whether the digital signature matches the deposit data.

11. The apparatus (400) according to any of claims 8-10, wherein the credible timestamp of the deposit data is provided by the timestamp provider after a payment voucher of the deposit requester is obtained.

12. The apparatus (400) according to any of claims 8-11, further comprising:
a generating module, configured to generate a deposit identifier of the deposit data, and to send the deposit identifier to the deposit requester.

13. The apparatus (400) according to any of claims 8-12, further comprising:
a cross-chain module, configured to send a cross-chain storage transaction request to a target deposit block-chain network to store the deposit data and the credible timestamp of the deposit data in the target deposit block-chain network.

14. An electronic device, comprising:
at least one processor; and
a memory communicatively connected with the at least one processor; wherein,
the memory stores instructions executable by the at least one processor, and when the instructions are executed by the at least one processor, the at least one processor executes the method of processing deposit according to any one of claims 1-7 is performed.

15. A non-transitory computer-readable storage medium storing computer instructions, wherein the computer instructions are configured to make a computer to execute the method of processing deposit according to any one of claims 1-7.
